# EUROPEAN PATENT SPECIFICATION

(11) **EP 2 425 471 B1**
(45) Date of publication and mention of the grant of the patent: **15.04.2015**
(21) Application number: 10769251.9
(22) Date of filing: 18.04.2010
(51) Int. Cl.: H01M 2/10, H01M 2/20, H01M 2/26, H01M 10/04, H01M 2/02

(54) **SINGLE CELL AND BATTERY PACK COMPRISING THE SAME**
EINZELZELLE UND BATTERIEPACK DAMIT
CELLULE UNIQUE ET BATTERIE D'ALIMENTATION COMPRENANT CETTE DERNIÈRE

(30) Priority: 30.04.2009 CN 200910107175
(43) Date of publication of application: 07.03.2012
(73) Proprietor: BYD Company Limited, Shenzhen 518118 (CN)
(72) Inventor: ZHENG, Weixin, Guangdong 518118 (CN)
(74) Representative: Hoffmann Eitle
(86) International application number: PCT/CN2010/071862
(87) International publication number: WO 2010/124562

(56) References cited:
- EP-A1- 1 475 852
- EP-A2- 1 160 893
- WO-A1-2008/144994
- CN-A- 1 697 240
- CN-A- 1 697 240
- CN-A- 101 662 004
- CN-Y- 201 349 038
- US-A1- 2005 238 953
- US-A1- 2006 115 727

## Description

### FIELD OF THE INVENTION

The present invention relates to battery, more particularly to a single cell with improved structure and a battery pack comprising the same.

### BACKGROUND

As batteries are more and more widely used nowadays, demand for enhanced battery performance is growing. Higher power output is required by recent equipment, such as an electric vehicle etc. Normally, a plurality of single cells are connected to form a power battery pack. And bolts and nuts of the single cells are commonly adopted to serve as positive electrode poles and negative electrode poles respectively which are connected in parallel and/or in series to form a desired power source with high power output.

However, this kind of connection may cause high internal resistance. That is to say, the current conducting area in the available space is limited, and the rate performance of the battery is restricted.

### SUMMARY OF THE INVENTION

In viewing thereof, the present invention is directed to solve at least one of the problems in the art. Accordingly, a single cell may need to be provided, which may meet high power discharge requirement and overcome safety defects in the art. Further, a single cell may need to be provided which may be capable of high rate discharge with enhanced safety and reliability.

Further, a power battery pack comprising the same may be provided.

According to an embodiment, a single cell may be provided, comprising: a shell with a first open end and a second open end; a first cover board adapted to hermetically seal the first open end; a second cover board adapted to hermetically seal the second open end; at least an electric core accommodated inside the shell having a positive tab and a negative tab for leading current; at least two positive electrode terminals, each having a first end portion conductively coupled to the positive tab and a second end portion extending through the first cover board; and at least two negative electrode terminals, each having a first end portion conductively coupled to the negative tab and a second end portion extending through the second cover board.

According to an embodiment, a power battery pack comprising a plurality of single cells as described above may be provided, which may be connected in series, in parallel or in series and parallel.

There are a plurality of electrode terminals with the same polarity in a single cell, thus conducting area of current is increased, and the rate discharging characteristics of the battery is enhanced. Especially, for electric vehicles which requiring batteries that maintains long time high rate discharging, the single cell and the power battery pack provide an enhanced solution.

Normally, a battery with high power output uses a plurality of tabs in a single cell to extract current, and then the electrode terminals are welded with the plurality of tabs. And the higher the power output is, the more tabs are needed accordingly. Thus, the total thickness of the tabs which are connected with the electrode terminals becomes large which bring much difficulty for the connection of the electrode terminals with the tabs. Further, the tabs are easily shed off which may affect the current output and, at some time, may cause shortcut and other problems related thereto.

According to the present invention, a plurality of electrode terminals of the same polarity may help to separate the total thickness of the tabs, thus it may be easier for ultrasonic welding or laser welding between the electrode terminals and tabs. Therefore it may be easier to realize high power output battery and the manufacture thereof. And the battery capacity may be improved without affecting battery performance. And the present invention is especially suited for high capacity battery with large thickens of electric cores, because the welding becomes easier. Even the thickness of the core may be properly increased to decrease the width of the electrode plates, thus ameliorating coiling problem, crinkling of the separator and so on. Still further, the peripheral length of the single cell may be reduced so that the weight of the battery is reduced.

And heat inside the battery due to large-current discharging and/or charging or abnormal discharging can be effectively dissipated through the plurality of electrode terminals, so that the large-current discharge performance of the battery and the safety thereof are improved as well as the battery lifespan. In addition, the single cells are very convenient for connection, especially for power battery pack, thus enhancing stability of a power vehicle in bumping state.

### DESCRIPTIONS OF THE DRAWING

These and other aspects and advantages of the invention will become apparent and more readily appreciated from the following descriptions taken in conjunction with the drawings in which:
Fig 1 shows a partial perspective view of a single cell according to an embodiment;
Fig 2 shows a cross sectional view along A-A shown in Fig 1;
Fig 3 shows a perspective view of a single cell according to an embodiment ;
Fig 4 shows a cross sectional view along B-B shown in Fig 3;
Fig 5 shows a cross sectional view of a single cell comprising three electrode terminals with the same polarity according to an embodiment;
Fig 6A shows a plan view of a single cell in the prior art;
Fig 6B shows a plan view of a periphery of a single cell having the same capacity as that shown in Fig. 6A according to an embodiment;
Fig 7 shows a schematic view of a battery pack according to an embodiment of the present invention where electrical terminals in the single cells are butt jointed;
Fig 8 shows a schematic view of a battery pack according to an embodiment of the present invention where electrical terminals in the single cells are lap jointed;
Fig 9 shows a schematic view of a battery pack according to an embodiment of the present invention where electrical terminals in the single cells are flange butt jointed;
Fig 10 shows a cross sectional view of a battery pack according to an embodiment of the invention where electrical terminals are bridge jointed;
Fig 11a shows a front perspective view of a battery pack according to an embodiment of the present invention; and
Fig 11b shows a rear perspective view of the battery pack shown in Fig. 11 a.

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.

### DETAILED DESCRIPTION OF THE PREFERRED EMBODIMENTS

Reference will be made in detail to embodiments. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

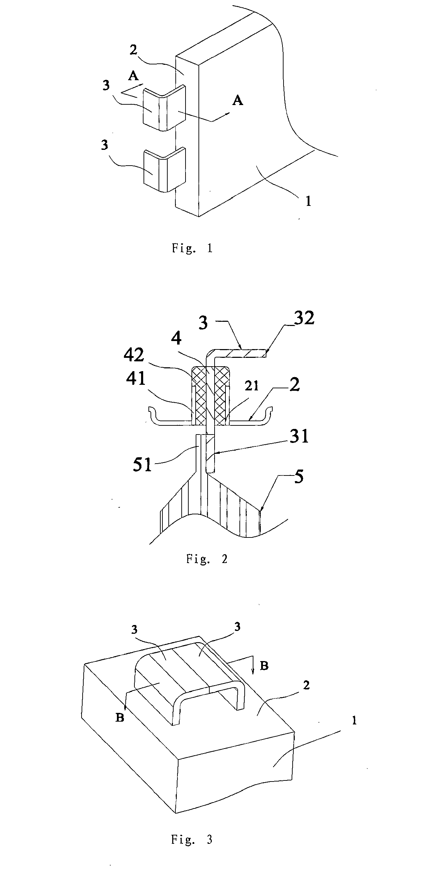

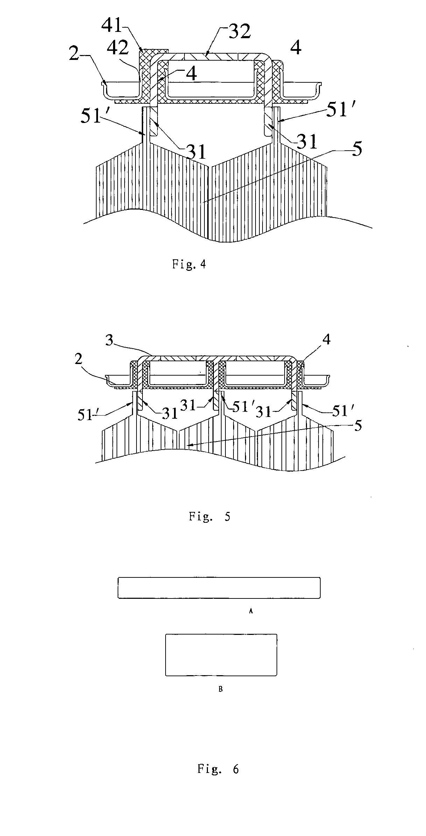

The present invention will be further described in details in conjunction with the drawings. Fig 1 shows a partial perspective view of a single cell according to an embodiment. Fig 2 shows a cross sectional view along A-A shown in Fig 1. Fig 3 shows a perspective view of a single cell according to an embodiment. Fig 4 shows a cross sectional view along B-B shown in Fig 3.

According to an embodiment, a single cell 1 may be provided, comprising: a shell with a first open end and a second open end; a first cover board adapted to hermetically seal the first open end; a second cover board adapted to hermetically seal the second open end; at least an electric core accommodated inside the shell having a positive tab and a negative tab for leading current; at least two positive electrode terminals, each having a first end portion conductively coupled to the positive tab and a second end portion extending through the first cover board; and at least two negative electrode terminals, each having a first end portion conductively coupled to the negative tab and a second end portion extending through the second cover board.

It should be noted that the structure described at either end of the single cell 1 may be adapted to both ends thereof, thus in the following, only the structure at one end will be described for clarity purpose.

According to one embodiment, the cover board 2 is connected with the shell in a sealed manner, the electric core 5 may be accommodated inside the shell. The electric core 5 may comprise a positive plate, a negative plate and a separator interposed therebetween. The electric core 5 may further comprise a positive tab and a negative tab for extracting current; the cover board 2 may further comprise an electrode terminal 3 penetrating through the cover board 2 for extracting current, the electrode terminal 3 may comprise a first end portion 31 in conduction with the electric core 5 which is sealed in the shell and a second end portion 32 located out of the shell for conducting current; the electrode terminal 3 may comprise a positive electrode terminal and a negative electrode terminal.

As shown in Figs 1, 2, two electrode terminals 3 with the same polarity are aligned straightly on an end of the single cell 1, the electrode terminal 3 with 90 degree bending angle has a second end portion 32 penetrating through the via hole 21 of the cover board 2 and extends out of the shell. The cover board 2 may be sealed with the electrode terminal 3 via a sealing structure 4. The sealing structure 4 may comprise a hollow rivet 41 and an insulating elastic member 42. The electrode terminal 3 may be held by the insulating elastic member 42 and the rivet 41, the rivet 41 may be press tightly against the insulating elastic member 42. The insulating elastic member 42 may be extended beyond the hollow rivet 41 and wraps an upper portion of the hollow rivet 41 to form a flanged structure. The first end portion 31 of the electrode terminal 3 may be welded on the tab 51 of the electric core 5 via ultrasonic welding. In Fig. 1, two electrode terminals 3 may be arranged along a width direction of the tab 51 to share the current from the tab 51. The electric core 5 may have a coiled core structure, the width of the positive and negative electrode plates may be about 290 mm, the sectional perimeter of the shell may be about 644 mm. By providing at least two electrode terminals 3 on the cover board 2 to be electrically connected with the tab 51, the conducting area for the single cell 1 may be increased and the rate performance may be enhanced accordingly.

The second end portion of the a plurality of positive electrode terminals may respectively extract current, or may form a connection and then extract current. The connection may be formed by normal welding or other connecting method. According to some embodiments, the second end portion of the positive electrode terminals may be connected to form an integral structure, that can be understood as an integrated electrode terminal may comprise a plurality of tabs connecting to the first end portions which deriving the current.

There is no special limitation on the positional relationship between the electrode terminals or negative terminals. For easier connection, assembly and production, according to some embodiments of the invention, the electrode terminals with the same polarity are parallel with each other. The electrode terminals penetrate through the cover board and then arranged along the length direction of the cover board or along the width direction. According to some preferred embodiments, the electrode terminals penetrate through the cover board and bending for easier connection and sealing, and also it may buffer direct force. According to some other preferred embodiments, the second portions of the electrode terminals penetrate out of the cover board may be bended for one or more times. If the electrode terminals with the same polarity extract the current separately, according to some embodiments, the bending direction of the electrode terminals may be the same, more preferably the electrode terminals with the same polarity are aligned directly on the cover board.

The electrode terminals may be any conductive members known in the art, for example, bending conductive pole or sheet formed by one body casting, conductive component formed by various welding conductive members in various shapes. According to some preferred embodiments, the electrode terminals are in sheet shape. Preferably the two ends of the electrode terminals are soft conductive sheets, more preferably they are formed by overlapping or coiling a plurality of layers of conductive sheets, so that it is favorable for buffering the shock on the joint of the electrode terminals and the sealing portions between the electrode terminal and cover board. The material for the electrode terminals may be various kinds of conductive material known in the art, for example metal foil, Cu, Al, Ni, stainless steel, carbon steel, Ni-Fe alloy and so on. The size of the electrode terminals may vary according to practical requirement. According to some preferred embodiments, considering about the manufacturing process, heating dissipation performance and so on, a rectangular parallelepiped shape may be adopted. When the electrode terminals may have sheet shape, the width may be about 1-90% of the width of the shell, the thickness of the electrode terminal may be about 5-90%. That means, if the size of the cell may be 58 mm×150 mm×400 mm, the thickness of the electrode terminal may be about 2-6mm, the width may be about 40-60mm, the length may be about 20-40mm.

The positive plate and the negative plate may have a dressed region and an undressed region respectively. The dressed region has been coated with active material, the end which may be parallel with the length direction of the electrode plate may have an undressed region with certain width, the undressed region may be specially remained when coating active material on the plate or it may be formed by scraping the dressed area. The active material may be any kinds of active positive or negative material known in the art. The coating or scraping process may be any method known in the art. The preparation method of the plate may be any method known in the field. According to some preferred embodiments, the electrode core may be formed by coiling the positive plate, negative plate and the separator interposed between along the length direction of the separator. To improve the safety performance of the battery, according to an embodiment of the invention, the outer layer of the core after coiling may be the separator. The positive tab and the negative tab may be any tabs known in the art. One or more tabs may be welded on the positive electrode plate and the negative electrode plate respectively. According to some preferred embodiments, the positive and negative tabs are formed by directly coiling and compressing the undressed region. The tabs may be extended from two ends of the cell core, or may be extended from just one end. According to some preferred embodiments, the positive tabs and the negative tabs are reversely placed and extend beyond the separator interposed between the positive plate and the negative plate.

Meanwhile, according to some preferred embodiments, the width of the positive plate and the negative plate may be about 10-110mm; more preferably 40-60mm. the width provided above may help to solve the difficulty of coiling and crape of the separator, and may decrease the section perimeter of the cell shell. According to some preferred embodiments, the sectional perimeter of the cell shell may be about 30-600mm, more preferably about 260-400mm. In this case, it will be beneficial for decreasing the weight of the cell, meanwhile the capacity will remain the same. It is of special importance for the mobile equipments such as electric vehicles which requires a plurality of cells to provide electricity. According to the above preferred embodiments of the invention, if the same capacity may be maintained, the battery provided in the above preferred embodiments of the invention may decrease the weight of the battery, and may be easy to realize welding, production, so that the yield rate may be further improved. Also the above mentioned cell may realize high power discharge and the safety performance may be enhanced.

One end of the cell shell may be formed with a cover board with a via hole, the positive electrode terminal or the negative electrode terminal has one end penetrate through the via hole and extend out of the shell. In the case that the tabs are extended from both ends of the electrode core, according to some preferred embodiments, the positive electrode terminals and the negative electrode terminals may be extended respectively from both ends of the shell, that means to conduct current from the two ends of the cell. The material for the insulating elastic member may be any kind of sealing and insulating material, for example it may be plastics, rubber, resin, glass, ceramic and so on, which may be insulating, organic solvent and HF acid preventing, and also may be attached with metal materials. The preparation method of the insulating elastic member may be prepared by process known in the art such as injection molding.

To improve the safety of the single cell, according to some other embodiments of the present invention, the joint of the negative tab with the negative terminal as well as the joint of the positive tab with the positive terminal has an insulating ring respectively. The insulating ring may be any conventional insulating ring known in the art such as a rubber ring, plastic ring and so on. The electrode terminals with the same polarity may be connected with the tab along the width direction of the tab, that means the electrode terminals with the same polarity may be connected with the same tab and extracting current from the same tab, so that the current and heat dissipation may be distributed over the at least two electrode terminals with the same polarity. The rate discharging performance and the safety performance of the single cell may be improved. Especially for the tabs, along the thickness direction of the tab groups, the electrode terminals with the same polarity may respectively share the thin tab groups. Thus, the problem of thick tab groups being difficult to weld for high capacity high current discharging battery may be solved. The electrode terminal and the tab may be easily connected by ultrasonic welding or laser welding and so on, which may be easier to realize and produce.

The present invention further provides a power battery pack containing a plurality of cells as described above, the plurality of cells are connected in parallel or in series or in parallel and series. The connection between the single cells may be realized by butt jointing, bridge jointing, lap jointing or flange butt jointing. The connection method may be welding and/or adhering. The welding method may be ultrasonic welding, laser welding, braze welding, flash welding, friction welding, resistance welding and so on. According to some preferred embodiments, laser welding may be preferable. The at least two positive terminals or negative terminals penetrate through the cover board and are bent accordingly. The connected positive electrode terminals or negative electrode terminals may be bent one or more times. For some preferred embodiments that the second end portions of the electrode terminals with the same polarity, bridge connection of the electrode terminals may be adopted. Here, bridge connection means that in between the electrode terminals there may be a conductive member for conducting the current between the cells. There may be no special limit for the conductive member. According to some preferred embodiments, to reduce the resistance, the conductive member may have the same material with the electrode terminal.

According to an embodiment as shown in Fig 3 and Fig 4, two parallel electrode terminals 3 with the same polarity are provided on one end of the cell 1. The second end portion 32 of the electrode terminal 3 with a 90 degree bending angle penetrates through the via hole on the cover board 2 and extends out of the shell. The second end portions 32 of the two electrode terminals are connected as one body structure as shown in Fig. 3. A sealing structure 4 may be adopted to seal the joint of the cover board 2 and the electrode terminal 3. The sealing structure 4 may comprise a rivet 41 and an insulating elastic member 42. The electrode terminal 3 may be in turn held by insulating elastic member 42 and then the rivet 41, the rivet 41 may be press tightly against the insulating elastic member 42. The insulating elastic member 42 extends beyond the hollow rivet 41 and wraps the upper portion of the hollow rivet 41 and further forms a flanged structure. The first end portion 31 of the electrode terminal 3 may be welded to the tabs of the electric core 5 via ultrasonic welding. The two electrode terminals 3 may be arranged along the thickness direction of the tab groups. Each electrode terminal 3 may be respectively welded with part 51' of the tabs to conduct the current accordingly. The electric core 5 may have a overlapped core structure, the width of the positive and negative electrode plates may be about 145 mm, the sectional perimeter of the cell shell may be about 406 mm. By at least two electrode terminals 3 on the cover board 2 to electrically connect with the tabs, the conducting area for the cell may be increased and the rate performance may be enhanced, meanwhile the welding thickness with the tabs may be decreased which may be beneficial for manufacturing.

Fig. 5 shows a cross sectional view of a single cell comprising three electrode terminals with the same polarity according to an embodiment of the invention.

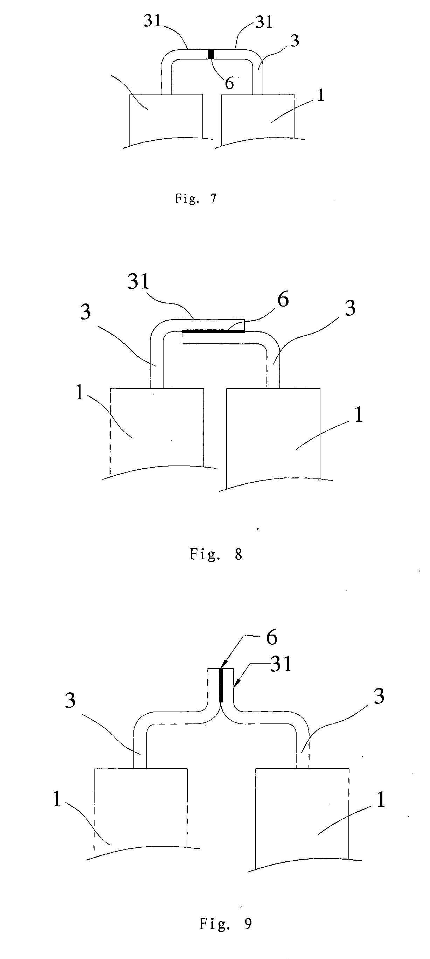

As shown in Fig 7, Fig 8 and Fig 9, the second end portions 32 of the electrode terminals 3 in the single cells 1 may be connected by butt jointing, lap jointing, or flange butt jointing to form a connecting portion 6.

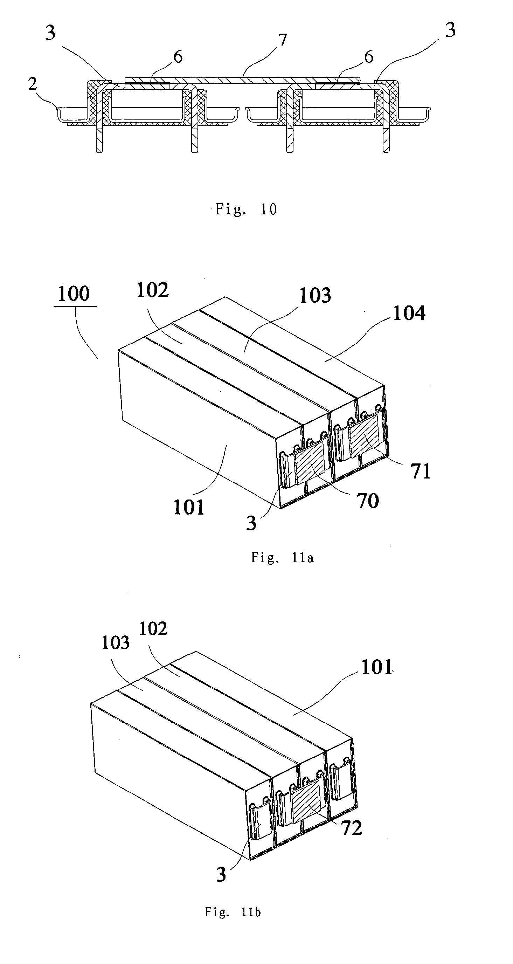

Fig 10 shows a cross sectional view of a battery pack according to an embodiment of the invention where electrical terminals are bridge jointed. As shown in Fig. 10, the second end portions 32 of the electrode terminals 3 in the single cells 1 may be bridge connected via a conductive sheet 7 so that the conductive sheet 7 forms a connecting portion 6 with the electrode terminals 3. Fig. 11 shows the power battery pack comprising the single cells 1 as described above. In Fig. 11, the electrode terminals are bridge jointed so that the single cells 1 may be connected in parallel, in series or in parallel and series accordingly.

Figs. 11a and 11b show a front and a rear perspective views of a battery pack 100 according to an embodiment of the present invention where single cells 101, 102, 103, 104 are connected in series respectively. As shown in Figs 11a, 11b, the electrode terminals 3 in the single cells 1 may be bridge-connected via conductive sheets 70, 71 and 72. As shown in Fig. 11a, the electrode terminals 3 of the single cells 101, 102 are bridge-connected, the electrode terminals of the single cells 103, 104 are bridge-connected. As shown in Fig. 11b, the electrode terminals of the single cells 102, 103 are bridge-connected so that the single cells 101, 102, 103, 104 are connected in series. However, it should be noted that the single cells may be connected in parallel or series-parallel. Therefore, the description thereof is for illustration purpose rather than limitation.

Although explanatory embodiments have been shown and described, it would be appreciated by those skilled in the art that changes, alternatives, and modifications can be made in the embodiments without departing from spirit and principles of the invention. Such changes, alternatives, and modifications all fall into the scope of the claims and their equivalents.

## Claims

1. A single cell (1) comprising:
a shell with a first open end and a second open end;
a first cover board adapted to hermetically seal the first open end;
a second cover board adapted to hermetically seal the second open end;
at least an electric core (5) accommodated inside the shell having a positive tab and a negative tab for leading current;
at least two positive electrode terminals (3), each having a first end portion conductively coupled to the positive tab and a second end portion (32) extending through the first cover board (2); and
at least two negative electrode terminals, each having a first end portion (31) conductively coupled to the negative tab and a second end portion (32) extending through the second cover board (2), wherein the second end portions (32) of the positive electrode terminals are connected to each other; and/or
the second end portions (32) of the negative electrode terminals are connected to each other;
there is a plurality of electric cores (5), the positive electrical terminals are aligned in a thickness direction of the positive tabs, and the first end portions (31) of the positive electrical terminals conductively coupled to the positive tabs are parallel with each other; and
the negative electrical terminals are aligned in a thickness direction of the negative tabs, and the first end portions (31) of the negative electrical terminals conductively coupled to the negative tabs are parallel with each other.

2. The single cell (1) of claim 1, wherein the positive electrode terminals are aligned in a width direction of the positive tab, and the first end portions (31) of the positive electrical terminals are conductively coupled to the positive tab; and
the negative electrode terminals are aligned in a width direction of the negative tab, and the first end portions (31) of the negative electrical terminals are conductively coupled to the negative tab.

3. The single cell (1) of claim 1, wherein the shell is rectangular parallelepiped, the electrode terminal (3) is formed with a sheet shape, the width of the electrode terminal (3) is about 5-90% of the width of the single cell (1), and the thickness of the electrode terminal (3) is about 1-90% of the thickness of the single cell (1).

4. The single cell (1) of claim 1, wherein the electric core (5) comprises a positive plate, a negative plate and a separator interposed therebetween which are coiled together, and the positive plate and the negative plate have a dressed area and undressed area at an end of the dressed area respectively, with the dressed area coated with active material as an electrode and the undressed area as a positive tab and the negative tab respectively, the positive tab and the negative tab extending beyond the separator in an opposite direction.

5. The single cell of claim 6, wherein the positive plate and negative plate have a width of about 10- 11 Omm; and
the shell has a cross section with a perimeter of about 30-600mm.

6. The single cell of claim 6, wherein the first cover board are formed with first via holes corresponding to the positive electrode terminals which penetrate through therein with a first hollow rivet (41) and a first insulating sealing member (42) provided therebetween so that each positive electrode terminal is fixed therein, the first hollow rivet (41) is integrally formed with the first cover board, and the first insulating sealing member (42) is disposed within the first hollow rivet (41) whereas tightly wraps around an open end of the first hollow rivet (41); and
the second cover board are formed with second via holes corresponding to the negative electrode terminals which penetrate through therein with a second hollow rivet and a second insulating sealing member provided therebetween so that each negative electrode terminal is fixed therein, the second hollow rivet is integrally formed with the second cover board, and the second insulating sealing member is disposed within the second hollow rivet whereas tightly wraps around an open end of the second hollow rivet.

7. The single cell in claim 1, wherein the joint of the negative tab with the negative electrode terminal and the joint of the positive tab and the positive tab are sealed respectively by insulating rings.

8. A power battery pack comprising a plurality of the single cells (1) according to claim 1 which are connected in parallel or in series or in parallel and series.

9. The power battery pack in claim 8, wherein the single cells (1) are connected in parallel or in series or in parallel and series by butt jointing, lap jointing or flange butt jointing of the second end portions of the positive and negative electrode terminals respectively.

10. The power battery pack in claim 8, wherein the second end portions (32) of the positive electrode terminals in each single cell are integrally connected with each other, and the second end portions of the negative electrode terminals in each single cell are integrally connected with each other, and the positive terminals and negative electrode terminals of the single cells are connected with each other via conductive members (70, 71) so that the single cells (1) are connected in parallel or in series or in parallel and series respectively.

## Patentansprüche

1. Einzelzelle (1) mit:
einer Hülle mit einem ersten offenen Ende und einem zweiten offenen Ende;
einer ersten Abdeckplatte, die derart angepasst ist, dass sie das erste offene Ende hermetisch abdichtet;
einer zweiten Abdeckplatte, die derart angepasst ist, dass sie das zweite offene Ende hermetisch abdichtet;
zumindest einem elektrischen Kern (5), der in der Hülle aufgenommen ist und einen positiven Streifen und einen negativen Streifen zur Stromführung aufweist;
zumindest zwei positiven Elektrodenanschlüssen (3), die jeweils einen ersten Endabschnitt, der leitfähig mit dem positiven Streifen verbunden ist, und einen zweiten Endabschnitt (32) aufweisen, der sich durch die erste Abdeckplatte (2) erstreckt; und
zumindest zwei negativen Elektrodenanschlüssen, die jeweils einen ersten Endabschnitt (31), der leitfähig mit dem negativen Streifen verbunden ist, und einen zweiten Endabschnitt (32) aufweisen, der sich durch die zweite Abdeckplatte (2) erstreckt, wobei die zweiten Endabschnitte (32) der positiven Elektrodenanschlüsse miteinander verbunden sind; und/oder
die zweiten Endabschnitte (32) der negativen Elektrodenabschnitte miteinander verbunden sind;
mehrere elektrische Kerne (5) vorhanden sind, wobei die positiven elektrischen Anschlüsse in einer Dickenrichtung der positiven Streifen ausgerichtet sind, und die ersten Endabschnitte (31) der positiven elektrischen Anschlüsse, die leitfähig mit den positiven Streifen verbunden sind, zueinander parallel sind; und
die negativen elektrischen Anschlüsse in einer Dickenrichtung der negativen Streifen ausgerichtet sind und die ersten Endabschnitte (31) der negativen elektrischen Anschlüsse, die leitfähig mit den negativen Streifen verbunden sind, zueinander parallel sind.

2. Einzelzelle (1) nach Anspruch 1, bei der die positiven Elektrodenanschlüsse in einer Breitenrichtung des positiven Streifens ausgerichtet sind, und die ersten Endabschnitte (31) der positiven elektrischen Anschlüsse mit dem positiven Streifen leitfähig verbunden sind; und
die negativen Elektrodenanschlüsse in einer Breitenrichtung des negativen Streifens ausgerichtet sind, und die ersten Endabschnitte (31) der negativen elektrischen Anschlüsse leitfähig mit dem negativen Streifen verbunden sind.

3. Einzelzelle (1) nach Anspruch 1, bei der die Hülle ein rechteckiges Parallelepiped ist, wobei der Elektrodenanschluss (3) in eine Bahnform ausgebildet ist, die Breite des Elektrodenanschlusses (3) ungefähr 5-90% der Breite der Einzelzelle (1) beträgt und die Dicke des Elektrodenanschlusses (3) ungefähr 1-90% der Dicke der Einzelzelle (1) beträgt.

4. Einzelzelle (1) nach Anspruch 1, bei welcher der elektrische Kern (5) eine positive Platte, eine negative Platte und ein dazwischen angeordnetes Trennelement aufweist, die miteinander verrollt sind, und die positive Platte und die negative Platte jeweils einen gedressten Bereich und einen ungedressten Bereich an dem Ende des gedressten Bereichs aufweisen, wobei der gedresste Bereich, der mit aktivem Material beschichtet ist, als eine Elektrode dient, und der ungedresste Bereich jeweils als der positive und der negative Streifen dient, wobei sich der positive Streifen und der negative Streifen in einer entgegengesetzten Richtung über das Trennelement hinaus erstrecken.

5. Einzelzelle nach Anspruch 6, bei der die positive Platte und die negative Platte eine Breite von ungefähr 10-110mm aufweisen, und die Hülle einen Querschnitt mit einem Durchmesser von ungefähr 30-600mm aufweist.

6. Einzelzelle nach Anspruch 6, bei der die erste Abdeckplatte mit ersten Durchgangslöchern ausgebildet ist, die den in diesen durchtretenden positiven Elektrodenanschlüssen entsprechend, wobei dazwischen eine erste Hohlniete (41) und ein erstes isolierendes Dichtelement (42) derart angeordnet sind, dass jeder positive Elektrodenanschluss in diesen befestigt ist, wobei die erste Hohlniete (41) einstückig mit der ersten Abdeckplatte ausgebildet ist, und das erste isolierende Dichtelement (42) in der ersten Hohlniete (41) angeordnet ist, während es eng um ein offenes Ende der ersten Hohlniete (41) gewunden ist; und
die zweite Abdeckplatte mit zweiten Durchgangslöchern ausgebildet ist, die den in diesen durchtretenden negativen Elektrodenanschlüssen entsprechen, wobei eine zweite Hohlniete und ein zweites isolierendes Dichtelement derart dazwischen angeordnet sind, dass jeder negative Elektrodenanschluss in diesen befestigt ist, wobei die zweite Hohlniete einstückig mit der zweiten Abdeckplatte ausgebildet ist und das zweite isolierende Dichtelement innerhalb der zweiten Hohlniete angeordnet ist, während es eng um ein offenes Ende der zweiten Hohlniete gewunden ist.

7. Einzelzelle nach Anspruch 1, bei der die Verbindung des negativen Streifens mit dem negativen Elektrodenanschluss und die Verbindungen des positiven Streifens mit dem positiven Streifen jeweils durch isolierende Ringe versiegelt sind.

8. Leistungs-Batteriepack mit mehreren Einzelzellen (1) nach Anspruch 1, die parallel oder in Serie oder parallel und in Serie verbunden sind.

9. Leistungs-Batteriepack nach Anspruch 8, bei dem die Einzelzellen (1) parallel oder in Reihe oder parallel und in Reihe jeweils mittels Stumpfstoßverbindung, Überlappungsverbindung oder Flansch-Stoßverbindung der zweiten Endabschnitte der positiven und negativen Elektrodenanschlüsse verbunden sind.

10. Leistungsbatteriepack nach Anspruch 8, bei dem die zweiten Endabschnitte (32) der positiven Elektrodenanschlüsse in jeder Einzelzelle einstückig miteinander verbunden sind, und die zweiten Endabschnitte der negativen Elektrodenanschlüsse in jeder Einzelzelle einstückig miteinander verbunden sind, und die positiven Anschlüsse und die negativen Elektrodenanschlüsse der Einzelzellen miteinander über leitfähige Elemente (70, 71) derart verbunden sind, dass die Einzelzellen (1) jeweils parallel oder in Reihe oder parallel und in Reihe verbunden sind.

## Revendications

1. Cellule individuelle (1) comprenant :
une coque avec une première extrémité ouverte et une deuxième extrémité ouverte ;
une première planche de couverture adaptée pour fermer hermétiquement la première extrémité ouverte ;
une deuxième planche de couverture adaptée pour fermer hermétiquement la deuxième extrémité ouverte ;
au moins un noyau électrique (5) reçu à l'intérieur de la coque ayant une languette positive et une languette négative pour conduire un courant ;
au moins deux bornes d'électrodes positives (3), ayant chacune une première partie d'extrémité couplée de manière conductrice à la languette positive et une deuxième partie d'extrémité (32) s'étendant à travers la première planche de couverture (2) ; et
au moins deux bornes d'électrodes négatives, ayant chacune une première partie d'extrémité (31) couplée de manière conductrice à la languette négative et une deuxième partie d'extrémité (32) s'étendant à travers la deuxième planche de couverture (2), où les deuxièmes parties d'extrémité (32) des bornes d'électrodes positives sont connectées l'une à l'autre ; et/ou
les deuxièmes parties d'extrémité (32) des bornes d'électrodes négatives sont connectées l'une à l'autre ;
il existe une pluralité de noyaux électriques (5), les bornes électriques positives sont alignées dans une direction de l'épaisseur des languettes positives, et les premières parties d'extrémité (31) des bornes électriques positives couplées de manière conductrice aux languettes positives sont parallèles l'une à l'autre ; et
les bornes électriques négatives sont alignées dans une direction de l'épaisseur des languettes négatives, et les premières parties d'extrémité (31) des bornes électriques négatives couplées de manière conductrice aux languettes négatives sont parallèles l'une à l'autre.

2. Cellule individuelle (1) de la revendication 1, dans laquelle les bornes d'électrodes positives sont alignées dans une direction de la largeur de la languette positive, et les premières parties d'extrémité (31) des bornes électriques positives sont couplées de manière conductrice à la languette positive ; et
les bornes d'électrodes négatives sont alignées dans une direction de la largeur de la languette négative, et les premières parties d'extrémité (31) des bornes électriques négatives sont couplées de manière conductrice à la languette négative.

3. Cellule individuelle (1) de la revendication 1, dans laquelle la coque est un parallélépipède rectangle, la borne d'électrode (3) présente une forme de feuille, la largeur de la borne d'électrode (3) est d'environ 5 à 90% de la largeur de la cellule individuelle (1), et l'épaisseur de la borne d'électrode (3) est d'environ 1 à 90% de l'épaisseur de la cellule individuelle (1).

4. Cellule individuelle (1) de la revendication 1, dans laquelle le noyau électrique (5) comprend une plaque positive, une plaque négative et un séparateur interposé entre celles-ci qui sont enroulés ensemble, et la plaque positive et la plaque négatives ont une zone revêtue et une zone non-revêtue au niveau d'une extrémité de la zone revêtue respectivement, avec la zone revêtue recouverte d'un matériau actif en tant qu'électrode et la zone non-revêtue en tant que languette positive et languette négative respectivement, la languette positive et la languette négative s'étendant au-delà du séparateur dans une direction opposée.

5. Cellule individuelle de la revendication 6, dans laquelle la plaque positive et la plaque négative ont une largeur d'environ 10 à 110 mm ; et
la coque a une coupe transversale avec un périmètre d'environ 30 à 600 mm.

6. Cellule individuelle de la revendication 6, dans laquelle la première planche de couverture est formée avec des premiers trous traversants correspondant aux bornes d'électrodes positives qui pénètrent à travers ceux-ci avec un premier rivet creux (41) et un premier élément d'étanchéité isolant (42) prévu entre ceux-ci de sorte que chaque borne d'électrode positive soit fixée dedans, le premier rivet creux (41) est formé d'un seul tenant avec la première planche de couverture, et le premier élément d'étanchéité isolant (42) est disposé dans le premier rivet creux (41), tout en entourant étroitement une extrémité ouverte du premier rivet creux (41) ; et
la deuxième planche de couverture est formée avec des deuxièmes trous traversants correspondant aux bornes d'électrodes négatives qui pénètrent à travers ceux-ci avec un deuxième rivet creux et un deuxième élément d'étanchéité isolant prévu entre ceux-ci de sorte que chaque borne d'électrode négative soit fixée dedans, le deuxième rivet creux est formé d'un seul tenant avec la deuxième planche de couverture, et le deuxième élément d'étanchéité isolant est disposé dans le deuxième rivet creux tout en entourant étroitement une extrémité ouverte du deuxième rivet creux.

7. Cellule individuelle dans la revendication 1, dans laquelle le joint de la languette négative avec la borne d'électrode négative et le joint de la languette positive et la languette positive sont scellés respectivement par des anneaux isolants.

8. Bloc-batterie d'alimentation comprenant une pluralité de cellules individuelles (1) selon la revendication 1 qui sont connectées en parallèle ou en série ou en parallèle et en série.

9. Bloc-batterie d'alimentation dans la revendication 8, dans lequel les cellules individuelles (1) sont connectées en parallèle ou en série ou en parallèle et en série par aboutement, par assemblage à recouvrement ou par aboutement à bride des deuxièmes parties d'extrémité des bornes d'électrodes positive et négative respectivement.

10. Bloc-batterie d'alimentation dans la revendication 8, dans lequel les deuxièmes parties d'extrémité (32) des bornes d'électrodes positives dans chaque cellule individuelle sont connectées d'un seul tenant l'une avec l'autre, et les deuxièmes parties d'extrémité des bornes d'électrodes négatives dans chaque cellule individuelle sont connectées d'un seul tenant l'une avec l'autre, et les bornes positives et les bornes d'électrodes négatives des cellules individuelles sont connectées l'une à l'autre par l'intermédiaire d'éléments conducteurs (70, 71) de sorte que les cellules individuelles (1) soient connectées en parallèle ou en série ou en parallèle et en série respectivement.
